# EUROPEAN PATENT SPECIFICATION

(11) **EP 2 807 901 B1**
(45) Date of publication and mention of the grant of the patent: **05.04.2017**
(21) Application number: 13740678.1
(22) Date of filing: 28.01.2013
(51) Int. Cl.: H05B 6/78

(54) **APPARATUS AND METHODS FOR TREATING SOLIDS BY ELECTROMAGNETIC RADIATION**
VORRICHTUNG UND VERFAHREN ZUR BEHANDLUNG VON FESTSTOFFEN DURCH ELEKTROMAGNETISCHE STRAHLUNG
APPAREIL ET PROCÉDÉS PERMETTANT DE TRAITER DES MATIÈRES SOLIDES PAR RAYONNEMENT ÉLECTROMAGNÉTIQUE

(30) Priority: 26.01.2012 US 201261590997 P
(43) Date of publication of application: 03.12.2014
(73) Proprietor: Microcoal, Inc., Vancouver, British Columbia V6B 4N5 (CA)
(72) Inventor: LIVNEH, Ben Zion, Denver, Colorado 80247 (US)
(74) Representative: Patentanwälte Olbricht Buchhold Keulertz
(86) International application number: PCT/US2013/023436
(87) International publication number: WO 2013/112993

(56) References cited:
- DE-A1- 4 428 418
- GB-A- 1 092 861
- GB-A- 2 457 493
- US-A1- 2005 236 403
- US-A1- 2009 038 213
- US-A1- 2011 146 544
- US-B2- 7 678 172

## Description

### FIELD OF THE INVENTION

Embodiments of the present invention are directed to apparatus and methods of treating a solid material by exposing the solid material to electromagnetic radiation (EMR). The solid material's properties are improved by the exposure to EMR. EMR comprises radio frequency (RF) or microwave radiation. For example, without limitation, solid fossil fuels (SFF), including (but not limited to) coal, are improved through its exposure to EMR, to remove water and/or other impurities.

### BACKGROUND OF THE INVENTION

Coal and other fossil fuels are mined with impurities and water content that can limit their use or lead. However, apparatus and processes for removing such impurities and water content can be awkward and expensive.
It would be useful to have apparatus and methods for removing impurities and water content from coal and other fossil fuels that can be readily adapted to existing facilities which use such fossil fuels.

GB 2 457 493 discloses an apparatus for exposing a coarsely divided solid material to radiation comprising a housing having one or more walls forming a chamber having a top, midsection and a bottom, the chamber having a fill opening for receiving the coarsely divided solid material located proximal to the top and an exit opening or discharging coarsely divided solid material located proximal to the bottom, the midsection extending between the top and bottom.

### BRIEF SUMMARY OF THE INVENTION

Embodiments of the present invention feature apparatus and methods for removing impurities and water content from coal, fossil fuels and cellular biomass that can be readily adapted to existing facilities. One embodiment of the present invention, directed to an apparatus for exposing a coarsely divided solid material to radiation, has a housing having one or more walls forming a chamber having a top, midsection and a bottom. The chamber has a fill opening for receiving the coarsely divided solid material which fill opening is located proximal to the top. The chamber has an exit opening for discharging coarsely divided solid material which exit opening is located proximal to the bottom. The midsection extends between the top and bottom for retaining a working volume of the coarsely divided solid material as the coarsely divided solid material moves therethrough by gravity. The movement of the coarsely divided solid material through the chamber defines a range of movement, and the chamber has at least one side cavity extending outside the range of movement. The cavity has at least one window for receiving radiation from a radiation source and passing the radiation into the chamber to the coarsely divided solid material, for subjecting a coarsely divided solid material to radiation as it moves through the chamber of said housing by gravity.

Embodiments of the present apparatus have particular utility wherein the coarsely divided solid material is selected from the group of solid fuels consisting of coal, shale, peat, wood, and cellulosic biomass. Microwave radiation removes water and other impurities upgrading such fuels for more efficient combustion.

One embodiment of the present invention features an apparatus further comprising a source of radiation, such as a RF or microwave generator.

One embodiment of the present invention features an apparatus wherein the chamber has a vent for removing gases generated by irradiation.

A further embodiment features an apparatus of wherein the chamber is in fluid communication with a source of inert gas to reduce combustion. For the purpose of this application, the term "inert gas" means not readily capable of participating in combustion processes. Such gases would include the gases commonly known as "noble" gases but also comprise relatively non-combustable gases, such as carbon dioxide and nitrogen.

One embodiment of the present invention further features an apparatus comprising a flow controller to control the rate of movement of the coarsely divided solid material through the chamber. The flow controller may take several forms such as, by way of example, without limitation, one or more gates which open or close or decrease the size of the exit opening to control the rate of the movement of the coarsely divided solid material. Other embodiments feature a flow controller in the form of conveying means which receives the coarsely divided solid material and determines the rate of removal from said chamber. For example, without limitation, one conveying means comprises one or more of the group of consisting of endless belts, rotating blades, rollers, moving vessels or combinations thereof.

Thus, the chamber is loaded with a coarsely divided solid material which has an angle of repose preventing the coarsely divided solid material from engaging the window in the cavity allowing the coarsely divided solid material to be irradiated as the material passes the cavity by gravity.

A further embodiment of the present invention is directed to a method for exposing a coarsely divided solid material to radiation. The method comprising the steps of providing an apparatus having a housing with one or more walls forming a chamber having a top, midsection and a bottom. The chamber has a fill opening for receiving the coarsely divided solid material located proximal to the top and an exit opening for discharging coarsely divided solid material located proximal to the bottom. The midsection extends between the top and bottom for retaining a working volume of the coarsely divided solid material as the coarsely divided solid material moves therethrough by gravity. The movement of coarsely divided solid material defines a range of movement. The chamber has at least one side cavity extending outside the range of movement and the cavity has at least one window for receiving radiation from a radiation source and passing the radiation into the chamber to the coarsely divided solid material, for subjecting a coarsely divided solid material to radiation as it moves through the chamber of the housing by gravity. The method further comprises the steps of directing a coarsely divided solid material into the chamber through the fill opening, and through the midsection; irradiating the coarsely divided material as the material passes the cavity by directing radiation through the window from a radiation source to produce a irradiated solid material; and, passing the irradiated solid material through the exit opening.

Embodiments of the present method have particular utility wherein the coarsely divided solid material is selected from the group of solid fuels consisting of coal, shale, peat, wood, and cellulosic biomass. RF or microwave radiation removes water and other impurities for more efficient combustion.

Embodiments of the present invention further comprise a method wherein the apparatus further comprising a source of radiation, such as a RF or microwave generator.

Further embodiments comprise a method wherein said chamber has a vent for removing gases generated by irradiation and the method comprises the step of removing the gases through the vent.

A further embodiment comprises a method wherein the chamber is in fluid communication with a source of inert gas and the method comprises the step of placing an inert gas in said chamber to reduce combustion. As used herein, the term "reduce combustion" includes eliminating combustion, dampening combustion processes that are taking place, and making combustion processes unlikely to occur due to removal or displacement of oxygen by inert gases. One embodiment of the present method features the use of carbon dioxide and nitrogen as inert gases.

A further embodiment of the invention is directed to a method wherein the apparatus further comprises a flow controller to control the rate of movement of the coarsely divided solid material through the chamber and the method comprises the step of controlling the movement of said coarsely divided solid material to subject the coarsely divided solid material to a predetermined amount of radiation. For example, without limitation, one method features a flow controller having one or more gates which open or close or decrease the size of the exit opening to control the rate of the movement of the coarsely divided solid material. Other embodiments feature a flow controller in the form of conveying means which receives the coarsely divided solid material and determines the rate of removal from the chamber. Examples of such conveying means are endless belts, rotating blades, rollers, moving vessels and the like and combinations thereof.

Thus, one embodiment of the present method features the steps of loading the chamber with a coarsely divided solid material which has an angle of repose preventing said coarsely divided solid material from engaging said window located in a cavity allowing said coarsely divided solid material to be irradiated as the material passes the cavity by gravity.

These and other features and advantages of the present invention will be apparent to those skilled in the art upon viewing the Figure, described briefly below, and upon reading the Detailed Description which follows.

### BRIEF DESCRIPTION OF THE DRAWING

Figure 1 depicts an apparatus embodying features of the present invention.
Figure 2 is a slightly elevated, side view of the apparatus of Figure 1.

### DETAILED DESCRIPTION OF THE INVENTION

Embodiments of the present invention will be described in detail with respect to apparatus and methods for subjecting a coarsely divided solid material to electromagnetic radiation. The apparatus and method will be described in detail with respect to coal, and other solid fossil fuels such as by way of example wood, charcoal, cellular biomass, shale, peat and the like. The apparatus and method have utility for subjecting coal to microwave to improve the coal's attributes (such as heat value) by reducing the coal's inherent moisture, and to make the coal more valuable. Subjecting coal to microwave radiation changes the coal's mineralogy thereby improving combustion efficiency, reducing environmental impact, and improving the combustion chamber's operation. Coal and other solid fossil fuels are used in combustion processes to produce steam and in kilns in cement and lime production.

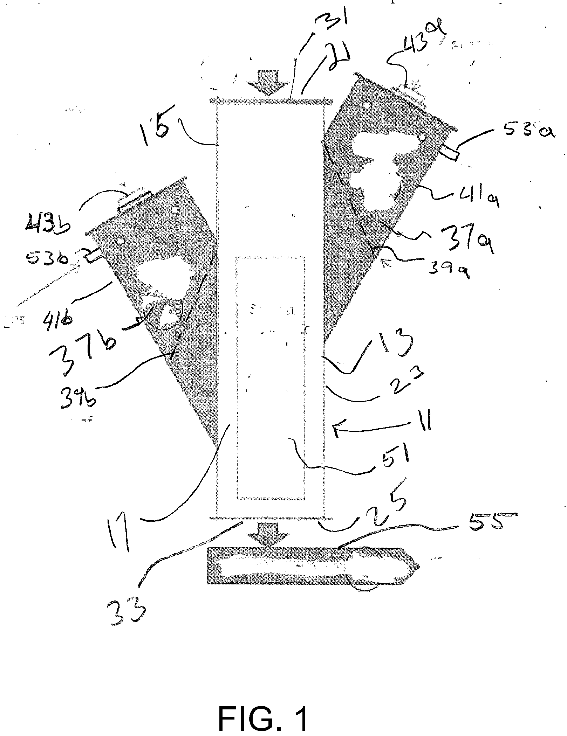

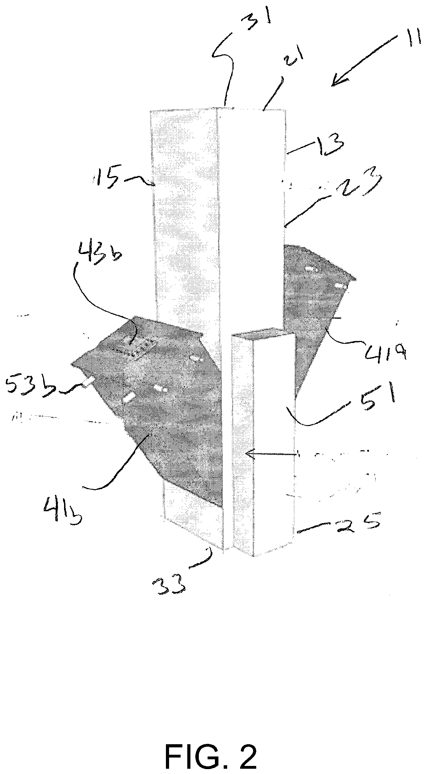

One embodiment of the present invention, directed to an apparatus for exposing a coarsely divided solid material to radiation, is depicted in Figures 1 and 2, generally designated by the numeral 11. The apparatus 11 has a housing 13 having one or more walls 15 forming a chamber 17 having a top 21, midsection 23 and a bottom 25. The housing 13, sized for industrial applications such as coal processing, is approximately three meters in height, about one meter in width and one to two meters in depth. It is constructed of suitable materials such as steel and steel alloys. The shape and form of the chamber 17 is such as to minimize or eliminate interaction of the steel with electromagnetic radiation.

The chamber 17 has a fill opening 31 for receiving the coarsely divided solid material. The fill opening 31 is proximal to the top 21. Similarly, the chamber 17 has an exit opening 33 for discharging coarsely divided solid material. The exit opening 33 is located proximal to the bottom 25. The midsection 23 extends between the top 21 and bottom 25 for retaining a working volume of the coarsely divided solid material as the coarsely divided solid material moves therethrough by gravity.

The movement of the coarsely divided solid material through the chamber 17 defines a range of movement. That is, the coarsely divided solid material occupies space as it moves through the chamber 17. Referring now to Figure 1, the chamber 17 has at least one side cavity, of which two are depicted, designated 37a and 37b. Cavity 37a and 37b are formed by housing protrusions 41a and 41b. The housing protrusions 41a and 41b and the cavity 37a and 37b formed thereof extend beyond the angle of repose of the solid material occupying the chamber 17. The angle of repose for coarsely divided solid material is generally thirty to fifty degrees from the horizontal and is generally designated by the numeral 39a and 39b in Figure 1. Each cavity 37a and 37b extends in a generally upward angle to allow each cavity 37a and 37b to turnover the solid material flowing into the cavity with material flowing downward through the chamber 17.

Each cavity 37a and 37b has at least one window 43a and 43b, respectively, for receiving radiation from a radiation source [not shown] such as a magnetron tube known in the art. Each window 43a and 43b passes the radiation into the chamber 17 to the coarsely divided solid material moving about the angle of repose as the coarsely divided solid material moves through the chamber 17 of the housing 13 by gravity. High power microwave energy is generated by a magnetron tube that operates at high voltage in a microwave generator, and is transmitted through waveguides and through the windows 43a and 43b to each cavity 37a and 37b, where it is received by the coarsely divided solid material interact (such as coal). EMR transparent windows 43a and 43b keep the waveguide and its upstream components clean of dust. The materials of construction of the windows 43a and 43b are EMR transparent material (such as ceramics or quartz).

The typical coarsely divided solid material is "dirty" and includes dust. If dust penetrates the waveguide or the microwave generator system where high power microwaves exist, it can cause damage to the delicate components. The present invention features construction and arrangement of the delicate components of the apparatus 11 - i.e. the microwave generator and waveguide on one hand, and the cavities 37a and 37b where the coarsely divided solid material is presented on the other hand - separated to keep the microwave section clean and clear of any fugitive dust, while allowing microwave energy to move freely from the clean microwave section to the dirty section.

One embodiment of the present invention features an apparatus 11 further comprising a source of radiation, such as a RF or microwave generator [not shown]. Microwave generators or magnetron tubes are well known in the art and are available in several power ranges. A typical microwave generator used as part of or in conjunction with apparatus 11 has 50 kilowatts of power.

The chamber 17 has a vent 51for removing gases generated by irradiation. Vent 51 is equipped with screening and grates [not shown] to retain solids in the chamber 17 and allow vapors and gases to exit. The vent 51 is placed in fluid communication with pumps or fans [not shown] for placing the vent 51 and chamber 17 under low pressure to withdraw gases.

The chamber 17 is in fluid communication with a source of inert gas to reduce combustion. Housing extensions 41a and 41b have inert gas conduits of which two are depicted in Figure 1 and denoted 53a and 53b respectively. For the purpose of this application, the term "inert gas" means not readily capable of participating in combustion processes. Such gases would include the gases commonly known as "noble" gases but also comprise relatively non-combustible gases, such as carbon dioxide and nitrogen. The inert gas conduits 53a and 53b are preferably directed to create gas currents which carry dust and dirt away from the windows 43a and 43b.

The inert gas conduits 53a and 53b flush the chamber 17 with an inert gas to minimize or eliminate potential combustion. The inert gas is removed through the vent 51.

Apparatus 11 further comprises a flow controller, generally designated by the numeral 55, to control the rate of movement of the coarsely divided solid material through the chamber 17. The flow controller 55 may take several forms such as, by way of example, without limitation, one or more gates [not shown] which open or close or decrease the size of the exit opening 33 to control the rate of the movement of the coarsely divided solid material. Other embodiments feature a flow controller 55 in the form of conveying means which receives the coarsely divided solid material and determines the rate of removal from the chamber 17. For example, without limitation, one conveying means [not shown] comprises one or more of the group of consisting of endless belts, rotating blades, rollers, moving vessels or combinations thereof.

Thus, the chamber 17 is loaded with a coarsely divided solid material which has an angle of repose 39a and 39b preventing the coarsely divided solid material from engaging each window 43a and 43b in each cavity 37a and 37b allowing the coarsely divided solid material to be irradiated as the material passes through the cavity 17 by gravity.

Embodiments of the present apparatus 11 have particular utility wherein the coarsely divided solid material is selected from the group of solid fuels consisting of coal, shale, peat, wood, and cellulosic biomass. Microwave radiation removes water and other impurities upgrading such fuels for more efficient combustion.

The method will be described in detail with respect to the operation of apparatus 11 for exposing a coarsely divided solid material to microwave radiation. The method comprises the step of providing an apparatus 11 having a housing 13 with one or more walls 15forming a chamber 17. The chamber 17 has a top 21, midsection 23 and a bottom 25. The chamber 17 has a fill opening 31 for receiving the coarsely divided solid material located proximal to the top 21 and an exit opening 33 for discharging coarsely divided solid material located proximal to the bottom 25. The midsection 23 extends between the top 21 and bottom 25 for retaining a working volume of the coarsely divided solid material as the coarsely divided solid material moves therethrough by gravity. The movement of coarsely divided solid material defines a range of movement. The chamber 17 has at least one side cavity of which two are depicted 37a and 37b extending outside the range of movement. Each cavity 37a and 37b has at least one window 43a and 43b for receiving radiation from a radiation source [not shown] and passing the radiation into the chamber 17 to the coarsely divided solid material, for subjecting a coarsely divided solid material to radiation as it moves through the chamber 17 of the housing 13 by gravity. The method further comprises the steps of directing a coarsely divided solid material into the chamber 17 through the fill opening 31, and through the midsection 23; irradiating the coarsely divided material as the material passes the cavities 37a and 37b by directing radiation through the windows 43a and 43b from a radiation source to produce a irradiated solid material; and, passing the irradiated solid material through the exit opening 33.

Preferably, the method comprises the step of removing gases formed during irradiation through vent 51.

Preferably, the method, wherein the chamber 17 is in fluid communication with a source of inert gas comprises the step of placing an inert gas in the chamber 17 to reduce combustion.

Preferably, the method, wherein the apparatus 11 further comprises a flow controller 55 comprises the step of controlling the movement of said coarsely divided solid material to subject the coarsely divided solid material to a predetermined amount of radiation.

Thus, one embodiment of the present method features the steps of loading the chamber 17 with a coarsely divided solid material which has an angle of repose 39a and 39b preventing said coarsely divided solid material from engaging said windows 43a and 43b located in a cavities 37a and 37b allowing said coarsely divided solid material to be irradiated as the material passes the cavity 37a and 37b by gravity. Embodiments of the present method have particular utility wherein the coarsely divided solid material is selected from the group of solid fuels consisting of coal, shale, peat, wood, and cellulosic biomass. RF or microwave radiation removes water and other impurities for more efficient combustion.

Thus, embodiments of the present invention have been described in detail with the understanding that the descriptions herein have been directed to the preferred embodiments and what the inventor considers the best mode. The present invention is subject to alteration and modification and the best mode may change over time. Therefore, that the present disclosure should not be considered limiting, but should encompass the subject matter of the claims that follow and their equivalents.

## Claims

1. An apparatus for exposing a coarsely divided solid material to radiation comprising:
a housing (13) having one or more walls (15) forming a chamber (17) having a top (21), midsection (23) and a bottom (25), the chamber (17) having a fill opening (31) for receiving the coarsely divided solid material located proximal to the top (21) and an exit opening (33) for discharging coarsely divided solid material located proximal to the bottom (25),
the midsection (23) extending between the top (21) and bottom (25) and **characterized in that** it is shaped for retaining a working volume of the coarsely divided solid material to have an angle of repose (39a, 39b) as the coarsely divided solid material moves through the midsection (23) by gravity and for defining a range of movement (39a, 39b) of the coarsely divided solid material,
the chamber (17) having at least one side cavity (37a, 37b) extending outside the range of movement (39a, 39b) and the at least one side cavity having at least one window (43a, 43b) located in a path of wave energy propagation between a radiation source and the chamber (17) and located to receive radiation from the radiation source and transmit the radiation into the chamber (17) through the window (43a, 43b) to the coarsely divided solid material, for subjecting the coarsely divided solid material to radiation as the coarsely divided solid material moves through the chamber (17) of the housing (13) by gravity.

2. The apparatus of claim 1 comprising a source of radiation **characterized in that** the source of radiation is a microwave generator.

3. The apparatus of claim 2 **characterized in that** the chamber has a vent (51) for removing gases generated by irradiation.

4. The apparatus of claim 1 **characterized in that** the chamber is in fluid communication with a source of inert gas to reduce combustion, wherein the inert gas comprises a noble gas or nitrogen or carbon dioxide or a combination of nitrogen and carbon dioxide.

5. The apparatus of claim 1 **characterized in that** it comprises a flow controller (55) to control the rate of movement of the coarsely divided solid material through the chamber (17), wherein the flow controller (55) comprises one or more gates which open or close or decrease the size of the exit opening (33) to control the rate of the movement of the coarsely divided solid material, and a conveying means which receives the coarsely divided solid material and determines the rate of removal from the chamber (17).

6. The apparatus of claim 1 **characterized in that** the chamber comprises at least a pair of side cavities (37a, 37b), each side cavity (37a, 37b) having at least one window (43a, 43b) located in a corresponding path of wave energy propagation between a corresponding radiation source and the chamber (17) for receiving radiation from the corresponding radiation source and transmitting the radiation into the chamber (17) through the window (43a, 43b) to the coarsely divided solid material, for subjecting the coarsely divided solid material to radiation as the coarsely divided solid material moves through the chamber (17) of the housing (13) by gravity.

7. The apparatus of claim 5 **characterized in that** the flow controller (55) is configured to control the rate of movement of the coarsely divided solid material such that chamber (17) is loaded with the coarsely divided solid material to provide the coarsely divided solid material with the angle of repose (39a, 39b) which prevents the coarsely divided solid material from engaging the window (43a, 43b) and allowing the coarsely divided solid material to be irradiated as the material passes through the chamber (17) by gravity.

8. The apparatus of claim 7 **characterized in that** the side cavity (37a, 37b) is formed by a protrusion which extends away from the chamber and wherein the side cavity (37a, 37b) includes a distal side cavity portion located beyond the angle of repose (39a, 39b) of the coarsely divided solid material.

9. The apparatus of claim 8 **characterized in that** the window (43a, 43b) is located in the distal side cavity portion, and wherein the window (43a, 43b) is located to block dust from the coarsely divided solid material from reaching the source of radiation as the coarsely divided solid material moves through the midsection (23) by gravity.

10. A method for exposing a coarsely divided solid material to radiation **characterized in that** it comprises the steps of:
providing an apparatus having a housing (13) having one or more walls (15) forming a chamber (17) having a top (21), midsection (23) and a bottom (25), the chamber (17) having a fill opening (31) for receiving the coarsely divided solid material located proximal to the top (21) and an exit opening (33) for discharging coarsely divided solid material located proximal to the bottom (25), the midsection (23) extending between the top (21) and bottom (23) and shaped for retaining a working volume of the coarsely divided solid material as the coarsely divided solid material moves through the midsection (23) by gravity and for defining a range of movement (39a, 39b) of the coarsely divided solid material, the chamber having at least one side cavity (37a, 37b) extending outside the range of movement (39a, 39b) and the at least one cavity (37a, 37b) having at least one window (43a, 43b) for receiving radiation from a radiation source and transmitting the radiation into the chamber (17) through the window (43a, 43b) to the coarsely divided solid material, for subjecting the coarsely divided solid material to irradiation as the coarsely divided solid material moves through the chamber (17) of the housing (15) by gravity;
directing the coarsely divided solid material into chamber (17) through the fill opening (31), and through the midsection (23) while retaining the coarsely divided solid material at least partially against the movement of the coarsely divided solid material through the midsection (23) by gravity to thereby provide the coarsely divided solid material with an angle of repose (39a, 39b) as the coarsely divided solid material moves through the midsection (23) by gravity;
irradiating the coarsely divided solid material as the coarsely divided solid material passes the cavity (37a, 37b) by directing radiation from a radiation source, through the window (43a, 43b) and into the chamber (17) to produce a irradiated solid material; and,
passing the irradiated solid material through the exit opening (33).

11. The method of claim 10 **characterized in that** the apparatus comprises a source of radiation, wherein the source of radiation is a microwave generator.

12. The method of claim 10 **characterized in that** the chamber (17) comprises a vent (51) for removing gases generated by irradiation and the method comprises the step of removing the gases through the vent (51).

13. The method of claim 10 **characterized in that** the chamber is in fluid communication with a source of inert gas and the method comprises the step of placing an inert gas in the chamber (17) to reduce combustion, wherein the inert gas comprises a noble gas, or nitrogen or carbon dioxide or a combination of nitrogen and carbon dioxide.

14. The method of claim 10 **characterized in that** the apparatus further comprises a flow controller (55) to control the rate of movement of the coarsely divided solid material through the chamber (17) and the method comprises the step of controlling the movement of the coarsely divided solid material to subject the coarsely divided solid material to a predetermined amount of radiation.

15. The method of claim 14 **characterized in that** the flow controller (55) comprises one or more gates which open or close or decrease the size of the exit opening to control the rate of the movement of the coarsely divided solid material and a conveying means which receives the coarsely divided solid material and determines the rate of removal from the chamber (17).

16. The method of claim 10 **characterized in that** the chamber (17) comprises at least a pair of side cavities (37a, 37b), each side cavity (37a, 37b) having at least one window (43a, 43b) located in a corresponding path of wave energy propagation between a corresponding radiation source and the chamber (17) for receiving radiation from the corresponding radiation source and transmitting the radiation into the chamber (17) through the window (43a, 43b) to the coarsely divided solid material, for subjecting the coarsely divided solid material to radiation as the coarsely divided solid material moves through the chamber (17) of the housing (15) by gravity.

17. The method of claim 10 **characterized in that** it comprises retaining the coarsely divided solid material at least partially against the flow of gravity in the chamber (17) such that the chamber (17) is loaded with a coarsely divided solid material to provide the coarsely divided material with angle of repose (39a, 39b) which prevents the coarsely divided solid material from engaging the window (43a, 43b)and allowing the coarsely divided solid material to be irradiated as the material passes the cavity (37a, 37b) by gravity.

## Patentansprüche

1. Eine Vorrichtung, bei der grob getrenntes festes Material einer Strahlung ausgesetzt wird, umfassend:
ein Gehäuse (13), das eine oder mehrere Wandungen (15) aufweist, welche eine Kammer (17) bilden, die einen oberen Bereich (21), einen Mittelteil (23) und einen Boden (25) aufweist, wobei die Kammer in der Nähe des oberen Bereichs (17) eine Füllöffnung (31) zur Aufnahme von grob getrenntem festen Material, und in der Nähe des Bodens (25) eine Ausgangsöffnung (33) zur Entsorgung von grob getrenntem festem Material aufweist,
den sich vom oberen Bereich (21) bis zum Boden (25) erstreckenden Mittelteil (23), **dadurch gekennzeichnet, dass** er derart geformt ist, dass er ein Arbeitsvolumen des grob getrennten festen Materials aufbewahren kann und dass er, während sich das grob getrennte feste Material aufgrund von Gravitation durch den Mittelteil (23) bewegt, einen Schüttwinkel (39a, 39b) zur Vorgabe eines Bewegungsbereichs (39a, 39b) des grob getrennten festen Materials aufweist,
die Kammer (17), die mindestens eine seitliche Aussparung (37a, 37b), die bis außerhalb des Bewegungsbereichs (39a, 39b) reicht, aufweist, wobei die mindestens eine seitliche Aussparung mindestens ein Fenster (43a, 43b) aufweist, das im Strahlengang einer Wellenenergieausbreitung zwischen einer Strahlenquelle und der Kammer (17) positioniert ist, und das weiterhin so positioniert ist, dass es Strahlung von der Strahlenquelle aufnimmt und durch das Fenster (43a, 43b) in die Kammer (17) zu dem grob getrennten festen Material weiterleitet, um das grob getrennte feste Material der Strahlung zu auszusetzen, während sich das grob getrennte feste Material aufgrund von Gravitation durch die Kammer (17) des Gehäuses (13) bewegt.

2. Vorrichtung nach Anspruch 1, umfassend eine Strahlenquelle, **dadurch gekennzeichnet, dass** die Strahlenquelle ein Mikrowellengenerator ist.

3. Vorrichtung nach Anspruch 2, **dadurch gekennzeichnet, dass** die Kammer eine Lüftungsöffnung (51) zur Entfernung von Gasen, die durch Bestrahlung entstehen, aufweist.

4. Vorrichtung nach Anspruch 1, **dadurch gekennzeichnet, dass** die Kammer zur Reduzierung von Verbrennungen in flüssiger Verbindung mit einer inerten Gasquelle steht, wobei das inerte Gas ein Edelgas oder Stickstoff oder Kohlenstoffdioxid oder eine Kombination aus Stickstoff und Kohlenstoffdioxid umfasst.

5. Vorrichtung nach Anspruch 1, **dadurch gekennzeichnet, dass** sie einen Durchflussregler (55) zur Regelung der Bewegungsrate des grob getrennten festen Materials durch die Kammer (17) aufweist, wobei der Durchflussregler (55) ein oder mehrere Tore umfasst, die sich öffnen oder schließen oder die Größe der Ausgangsöffnung (33) vermindern, um die Bewegungsrate des grob getrennten festen Materials zu regeln, und weiterhin ein Beförderungsmittel aufweist, welches das grob getrennte feste Material aufnimmt und dessen Entsorgungsrate aus der Kammer (17) bestimmt.

6. Vorrichtung nach Anspruch 1, **dadurch gekennzeichnet, dass** die Kammer mindestens ein Paar seitlicher Aussparungen (37a, 37b) umfasst, wobei jede seitliche Aussparung (37a, 37b) mindestens ein Fenster aufweist (43a, 43b), das im korrespondierenden Strahlengang einer Wellenenergieausbreitung zwischen einer korrespondierenden Strahlenquelle und der Kammer (17) positioniert ist, um die Strahlung von der Strahlenquelle aufzunehmen und durch das Fenster (43a, 43b) in die Kammer (17) zu dem grob getrennten festen Material weiterzuleiten, um das grob getrennte feste Material der Strahlung zu auszusetzen, während sich das grob getrennte feste Material aufgrund von Gravitation durch die Kammer (17) des Gehäuses (13) bewegt.

7. Vorrichtung nach Anspruch 5, **dadurch gekennzeichnet, dass** der Durchflussregler (55) derart konfiguriert ist, dass er die Bewegungsrate des grob getrennten festen Materials in einer solchen Weise regelt, dass die Kammer (17) mit dem grob getrennten festen Material beladen wird, um dem grob getrenntem festem Material den Schüttwinkel (39a, 39b) zu geben, wodurch verhindert wird, dass sich das grob getrennte feste Material dem Fenster nähert (43a, 43b) und wodurch das grob getrennte feste Material bestrahlt werden kann, während das grob getrennte feste Material aufgrund von Gravitation die Kammer (17) passiert.

8. Vorrichtung nach Anspruch 7, **dadurch gekennzeichnet, dass** die seitliche Aussparung (37a, 37b) durch einen Vorsprung, der von der Kammer weg ragt, geformt wird, wobei die seitliche Aussparung (37a, 37b) einen distalen Bereich der seitlichen Aussparung beinhaltet, der hinter den Schüttwinkeln (39a, 39b) des grob getrennten festen Material positioniert ist.

9. Vorrichtung nach Anspruch 8, **dadurch gekennzeichnet, dass** das Fenster (43a, 43b) im distalen Bereich der seitlichen Aussparung positioniert ist, wobei das Fenster (43a, 43b) derart positioniert ist, dass es Staub des grob getrennten festen Materials daran hindert, die Strahlenquelle zu erreichen, während sich das grob getrennte feste Material aufgrund von Gravitation durch den Mittelteil (23) bewegt.

10. Verfahren, um grob getrenntes festes Material einer Strahlung auszusetzen, **dadurch gekennzeichnet, dass** es die folgenden Schritte umfasst:
Bereitstellung einer Vorrichtung, die ein Gehäuse (13), das das eine oder mehrere Wandungen (15) aufweist, welche eine Kammer (17) bilden, die einen oberen Bereich (21), einen Mittelteil (23) und einen Boden (25) aufweist, wobei die Kammer in der Nähe des oberen Bereichs (17) eine Füllöffnung (31) zur Aufnahme von grob getrenntem festen Material, und in der Nähe des Bodens (25) eine Ausgangsöffnung (33) zur Entsorgung von grob getrenntem festen Material aufweist, wobei sich der Mittelteil (23) vom oberen Bereich (21) bis zum Boden (25) erstrecket und derart geformt ist, dass er ein Arbeitsvolumen des grob getrennten festen Materials aufbewahren kann, während sich das grob getrennte feste Material aufgrund von Gravitation durch den Mittelteil (23) bewegt, und dass er einen Bewegungsbereich (39a, 39b) des grob getrennten festen Materials vorgibt, wobei die Kammer (17) mindestens eine seitliche Aussparung (37a, 37b), die bis außerhalb des Bewegungsbereichs (39a, 39b) reicht, aufweist, wobei die mindestens eine seitliche Aussparung (37a, 37b) mindestens ein Fenster (43a, 43b) aufweist, das Strahlung von der Strahlenquelle aufnimmt und durch das Fenster (43a, 43b) in die Kammer (17) zu dem grob getrennten festen Material weiterleitet, um das grob getrennte feste Material der Strahlung zu auszuseten, während sich das grob getrennte feste Material aufgrund von Gravitation durch die Kammer (17) des Gehäuses (13) bewegt;
Führung des grob getrennten festen Materials in die Kammer (17) durch die Füllöffnung (31) sowie durch den Mittelteil (23), wobei das grob getrennte feste Material zumindest teilweise entgegen der Bewegung des grob getrennten festen Materials durch den Mittelteil (23) aufgrund von Gravitation zurückgehalten wird, wodurch dem grob getrennten festen Material ein Schüttwinkel (39a, 39b) gegeben wird, während sich das grob getrennte feste Material aufgrund von Gravitation durch den Mittelteil (23) bewegt;
Bestrahlung des grob getrennten festen Materials, während das grob getrennte feste Material die Aussparung (37a, 37b) passiert, indem die Strahlung, die von einer Strahlenquelle ausgeht, durch das Fenster (43a, 43b) und in die Kammer (17) umgeleitet wird, um ein bestrahltes festes Material zu erzeugen; und,
Passage des bestrahlten festen Materials durch die Entsorgungsöffnung (33).

11. Verfahren nach Anspruch 10, **dadurch gekennzeichnet, dass** die Vorrichtung eine Strahlenquelle umfasst, wobei die Strahlenquelle ein Mikrowellengenerator ist.

12. Verfahren nach Anspruch 10, **dadurch gekennzeichnet, dass** die Kammer (17) eine Lüftungsöffnung (51) zur Entfernung von Gasen, die durch Bestrahlung entstehen, aufweist, und dass das Verfahren einen Schritt zur Entfernung von Gasen durch die Lüftungsöffnung (51) aufweist.

13. Verfahren nach Anspruch 10, **dadurch gekennzeichnet, dass** die Kammer in flüssiger Verbindung mit einer inerten Gasquelle steht und dass das Verfahren einen Schritt aufweist, bei dem zur Reduzierung von Verbrennungen ein inertes Gas in die Kammer (17) eingelassen wird, wobei das inerte Gas ein Edelgas oder Stickstoff oder Kohlenstoffdioxid oder eine Kombination aus Stickstoff und Kohlenstoffdioxid umfasst.

14. Verfahren nach Anspruch 10, **dadurch gekennzeichnet, dass** die Vorrichtung weiterhin einen Durchflussregler (55) zur Regelung der Bewegungsrate des grob getrennten festen Materials durch die Kammer (17) umfasst, und dass das Verfahren einen Schritt aufweist, bei dem die Bewegung des grob getrennten festen Materials geregelt wird, um das grob getrennte feste Material einer vorbestimmten Strahlungsmenge auszusetzen.

15. Verfahren nach Anspruch 14, **dadurch gekennzeichnet, dass** der Durchflussregler (55) ein oder mehrere Tore umfasst, die sich öffnen oder schließen oder die Größe der Ausgangsöffnung (33) vermindern, um die Bewegungsrate des grob getrennten festen Materials zu regeln, und weiterhin ein Beförderungsmittel umfasst, welches das grob getrennte feste Material aufnimmt und dessen Entsorgungsrate aus der Kammer (17) bestimmt.

16. Verfahren nach Anspruch 10, **dadurch gekennzeichnet, dass** die Kammer (17) mindestens ein Paar seitlicher Aussparungen (37a, 37b) umfasst, wobei jede seitliche Aussparung (37a, 37b) mindestens ein Fenster aufweist (43a, 43b), das im korrespondierenden Strahlengang einer Wellenenergieausbreitung zwischen einer korrespondierenden Strahlenquelle und der Kammer (17) positioniert ist, um die Strahlung von der Strahlenquelle aufzunehmen und durch das Fenster (43a, 43b) in die Kammer (17) zu dem grob getrennten festen Material weiterzuleiten, um das grob getrennte feste Material der Strahlung zu auszusetzen, während sich das grob getrennte feste Material aufgrund von Gravitation durch die Kammer (17) des Gehäuses (13) bewegt.

17. Verfahren nach Anspruch 10, **dadurch gekennzeichnet, dass** das grob getrennte feste Material zumindest teilweise entgegen der Gravitationsrichtung in der Kammer (17) zurückgehalten wird, wodurch die Kammer (17) langsam mit grob getrenntem festen Material befüllt wird, wodurch dem grob getrennten festen Material ein Schüttwinkel (39a, 39b) gegeben wird, was verhindert, dass sich das grob getrennte feste Material dem Fenster nähert (43a, 43b) und wodurch das grob getrennte feste Material bestrahlt werden kann, während das grob getrennte feste Material aufgrund von Gravitation die Aussparung (37a, 37b) passiert.

## Revendications

1. Appareil pour exposer un matériau solide divisé grossièrement à un rayonnement comprenant :
- une enceinte (13) ayant une ou plusieurs parois (15) formant une chambre (17) ayant un dessus (21), une section médiane (23) et un fond (25), la chambre (17) comportant une orifice de remplissage (31) pour recevoir le matériau solide divisé grossièrement située à proximité du dessus (21) et une orifice de sortie (33) pour évacuer du matériau solide divisé grossièrement situé à proximité du fond (25),
- la section médiane (23) s'étendant entre le dessus (21) et le fond (25) et **caractérisée en ce qu'**elle est conformée pour retenir un volume de travail du matériau solide divisé grossièrement pour qu'il ait un angle de repos (39a, 39b) tandis que le matériau solide divisé grossièrement se déplace à travers la section médiane (23) par gravité et pour définir une course de déplacement (39a, 39b) du matériau solide divisé grossièrement,
- la chambre (17) ayant au moins une cavité latérale (37a, 37b) s'étendant à l'extérieur de la course de déplacement (39a, 39b) et ladite au moins une cavité latérale ayant au moins une fenêtre (43a, 43b) située dans un chemin de propagation d'énergie d'onde (17) entre une source de rayonnement et la chambre (17) et située de manière à recevoir un rayonnement provenant de la source de rayonnement et transmettre le rayonnement dans la chambre (17) à travers la fenêtre (43a, 43b) au matériau solide divisé grossièrement, pour soumettre le matériau solide divisé grossièrement à un rayonnement lorsque le matériau solide divisé grossièrement se déplace à travers la chambre (17) de l'enceinte (13) par gravité.

2. Appareil selon la revendication 1, comprenant une source de rayonnement, **caractérisé en ce que** la source de rayonnement est un générateur de micro-ondes.

3. Appareil selon la revendication 2, **caractérisé en ce que** la chambre présente un orifice d'évacuation (51) pour éliminer les gaz générés par irradiation.

4. Appareil selon la revendication 1, **caractérisé en ce que** la chambre est en communication de fluide avec une source de gaz inerte pour réduire la combustion, dans laquelle le gaz inerte comprend un gaz noble ou de l'azote ou du dioxyde de carbone ou une combinaison d'azote et de dioxyde de carbone.

5. Appareil selon la revendication 1, **caractérisé en ce qu'**il comprend un régulateur de débit (55) pour contrôler la vitesse de déplacement du matériau solide divisé grossièrement à travers la chambre (17), dans lequel le régulateur de débit (55) comprend une ou plusieurs portes qui ouvre(nt) ou ferme(nt) ou diminue(nt) la dimension de l'orifice de sortie (33) pour contrôler la vitesse du déplacement du matériau solide divisé grossièrement, et des moyens de transport qui reçoivent le matériau solide divisé grossièrement et déterminent la vitesse d'évacuation de la chambre (17).

6. Appareil selon la revendication 1, **caractérisé en ce que** la chambre comprend au moins une paire de cavités latérales (37a, 37b), chaque cavité latérale (37a, 37b) ayant au moins une fenêtre (43a, 43b) située dans un chemin correspondant de la propagation d'énergie d'onde entre une source de rayonnement correspondante et la chambre (17) pour recevoir le rayonnement provenant de la source de rayonnement correspondante et transmettre le rayonnement dans la chambre (17) à travers la fenêtre (43a, 43b) au matériau solide divisé grossièrement, pour soumettre le matériau solide divisé grossièrement au rayonnement lorsque le matériau solide divisé grossièrement se déplace dans la chambre (17) de l'enceinte (13) par gravité.

7. Appareil selon la revendication 5, **caractérisé en ce que** le régulateur de débit (55) est configuré pour contrôler la vitesse de déplacement du matériau solide divisé grossièrement de sorte que la chambre (17) est chargée avec le matériau solide divisé grossièrement pour fournir au matériau solide divisé grossièrement un angle de repos (39a, 39b) qui empêche le matériau solide divisé grossièrement de s'engager dans la fenêtre (43a, 43b) et qui permet au matériau solide divisé grossièrement d'être irradié lorsque le matériau traverse la chambre (17) par gravité.

8. Appareil selon la revendication 7, **caractérisé en ce que** la cavité latérale (37a, 37b) est formée par une protubérance qui s'étend à l'opposé de la chambre et dans lequel la cavité latérale (37a, 37b) comprend une partie de cavité latérale distale située au-delà de l'angle de repos (39a, 39b) du matériau solide divisé grossièrement.

9. Appareil selon la revendication 8, **caractérisé en ce que** la fenêtre (43a, 43b) est située dans la partie de cavité latérale distale, et dans lequel la fenêtre (43a, 43b) est située de manière à bloquer la poussière du matériau solide divisé grossièrement pour qu'elle n'atteigne pas la source de rayonnement alors que le matériau solide divisé grossièrement se déplace à travers la section médiane (23) par gravité.

10. Procédé pour exposer un matériau solide divisé grossièrement à un rayonnement, **caractérisé en ce qu'**il comprend les étapes de :
- fournir un appareil ayant une enceinte (13) ayant une ou plusieurs parois (15) formant une chambre (17) ayant un dessus (21), une section médiane (23) et un fond (25), la chambre (17) comportant une orifice de remplissage (31) pour recevoir le matériau solide divisé grossièrement situé à proximité du dessus (21) et une orifice de sortie (33) pour évacuer du matériau solide grossièrement divisé situé à proximité du fond (25), la partie médiane (23) s'étendant entre le dessus (21) et le fond (23) et conformée pour retenir un volume de travail du matériau solide divisé grossièrement lorsque le matériau solide divisé grossièrement se déplace à travers la section médiane (23) par gravité et pour définir une course de déplacement (39a, 39b) du matériau solide divisé grossièrement, la chambre ayant au moins une cavité latérale (37a, 37b) s'étendant à l'extérieur de la course de déplacement (39a, 39b) et ladite au moins une cavité latérale (37a, 37b) ayant au moins une fenêtre (43a, 43b) pour recevoir un rayonnement provenant d'une source de rayonnement et transmettre le rayonnement dans la chambre (17) à travers la fenêtre (43a, 43b) au matériau solide divisé grossièrement, afin de soumettre le matériau solide divisé grossièrement à une irradiation lorsque le matériau solide divisé grossièrement se déplace à travers la chambre (17) de l'enceinte (15) par gravité ;
- diriger le matériau solide divisé grossièrement dans la chambre (17) à travers l'orifice de remplissage (31), et à travers la section médiane (23) tout en retenant le matériau solide divisée grossièrement au moins partiellement contre le déplacement du matériau solide grossièrement divisé à travers la section médiane (23) par gravité pour ainsi fournir au matériau solide divisé grossièrement un angle de repos (39a, 39b) lorsque le matériau solide divisé grossièrement se déplace à travers la section médiane (23) par gravité ;
- irradier le matériau solide divisé grossièrement lorsque le matériau solide divisé grossièrement passe la cavité (37a, 37b) en dirigeant le rayonnement d'une source de rayonnement, à travers la fenêtre (43a, 43b) et dans la chambre (17) pour fabriquer un matériau solide irradié ; et,
- faire passer le matériau solide irradié à travers l'orifice de sortie (33).

11. Procédé selon la revendication 10, **caractérisé en ce que** l'appareil comprend une source de rayonnement, dans lequel la source de rayonnement est un générateur de micro-ondes.

12. Procédé selon la revendication 10, **caractérisé en ce que** la chambre (17) comprend un orifice d'évacuation (51) pour éliminer les gaz générés par irradiation et le procédé comprend l'étape d'élimination des gaz à travers l'orifice d'évacuation (51).

13. Procédé selon la revendication 10, **caractérisé en ce que** la chambre est en communication de fluide avec une source de gaz inerte et le procédé comprend l'étape de placement d'un gaz inerte dans la chambre (17) pour réduire la combustion, dans lequel le gaz inerte comprend un gaz noble ou de l'azote ou dioxyde de carbone ou une combinaison d'azote et de dioxyde de carbone.

14. Procédé selon la revendication 10, **caractérisé en ce que** l'appareil comprend en outre un contrôleur de débit (55) pour contrôler la vitesse de déplacement du matériau solide divisé grossièrement à travers la chambre (17) et le procédé comprend l'étape de contrôle du déplacement du matériau solide divisé grossièrement pour soumettre le matériau solide divisé grossièrement à une quantité prédéterminée de rayonnement.

15. Procédé selon la revendication 14, **caractérisé en ce que** le régulateur de débit (55) comprend une ou plusieurs portes qui ouvre(nt) ou ferme(nt) ou diminue(nt) la dimension de l'orifice de sortie pour contrôler la vitesse de déplacement du matériau solide divisé grossièrement et des moyens de transport qui reçoivent le matériau solide divisé grossièrement et déterminent la vitesse d'évacuation de la chambre (17).

16. Procédé selon la revendication 10, **caractérisé en ce que** la chambre (17) comprend au moins une paire de cavités latérales (37a, 37b), chaque cavité latérale (37a, 37b) ayant au moins une fenêtre (43a, 43b) située dans un chemin de propagation d'énergie d'onde entre la source de rayonnement correspondante et la chambre (17) pour recevoir le rayonnement provenant de la source de rayonnement correspondante et transmettre le rayonnement à l'intérieur de la chambre (17) à travers la fenêtre (43a, 43b) vers le matériau solide divisé grossièrement, pour soumettre le matériau solide divisé grossièrement à un rayonnement lorsque le matériau solide divisé grossièrement se déplace dans la chambre (17) de l'enceinte (15) par gravité.

17. Procédé selon la revendication 10, **caractérisé en ce qu'**il comprend la retenue du matériau solide divisé grossièrement au moins partiellement contre le flux de gravité dans la chambre (17) de sorte que la chambre (17) est chargée d'un matériau solide divisé grossièrement afin de fournir le matériau solide divisé grossièrement avec un angle de repos (39a, 39b) qui empêche le matériau solide divisé grossièrement de s'engager dans la fenêtre (43a, 43b) et de permettre au matériau solide divisé grossièrement d'être irradié lorsque le matériau passe la cavité (37a, 37b) par la gravité.
